Europäisches Patentamt

(19) European Patent Office

Office européen des brevets

(11) Numéro de publication: **0 225 827 B1**

(12) **FASCICULE DE BREVET EUROPEEN**

(45) Date de publication du fascicule du brevet:
28.02.90

(51) Int. Cl.⁴: **B21B 13/14**, F16C 13/00

(21) Numéro de dépôt: 86402601.8

(22) Date de dépôt: **21.11.86**

(54) **Cylindre à frette tournante.**

(30) Priorité: **22.11.85 FR 8517337**

(43) Date de publication de la demande:
**16.06.87 Bulletin 87/25**

(45) Mention de la délivrance du brevet:
**28.02.90 Bulletin 90/9**

(84) Etats contractants désignés:
**AT BE CH DE ES FR GB GR IT LI LU NL SE**

(56) Documents cités:
**DE-A- 2 332 861**
**DE-A- 2 632 452**
**NL-A- 294 473**
**US-A- 4 035 038**

(73) Titulaire: **CLECIM, 107 boulevard de la Mission Marchand, F-92402 Courbevole Cédex(FR)**

(72) Inventeur: **Quehen, André, 2-A rue Emile Zola, F-95300 Pontoise(FR)**

(74) Mandataire: **Le Brusque, Maurice et al, Cabinet Harlé et Phélip 21, rue de la Rochefoucauld, F-75009 Paris(FR)**

## Description

L'invention a pour objet un cylindre à frette tournante utilisable notamment dans un laminoir.

Dans les installations de production et/ou de laminage de matériaux en bandes, tels que du papier ou des produits métalliques, on utilise, depuis un certain temps, des cylindres dits "à frette tournante" comprenant une enveloppe tubulaire déformable.

On sait qu'un laminoir comprend, d'une façon générale, deux cylindres de travail s'appuyant respectivement sur au moins deux cylindres d'appui, l'ensemble étant monté dans un châssis fixe. Pour diverses raisons et en particulier pour régler la planéité du produit laminé, on a prévu d'agir sur le profil des cylindres de travail ou des cylindres d'appui. A cet effet, on peut utiliser des dispositifs de cambrage agissant sur les extrémités des arbres des cylindres, ou bien, sur le profil de la surface extérieure du cylindre, les deux dispositions pouvant d'ailleurs être combinées. Pour agir sur le profil extérieur du cylindre, notamment dans le cas des cylindres d'appui, on utilise avantageusement des cylindres comprenant une enveloppe tubulaire déformable tournant librement autour de son axe sur un arbre formant une poutre résistante prenant appui sur les deux montants du châssis et définissant l'axe de rotation. Entre l'arbre fixe, et l'enveloppe tubulaire sont placés, sur toute la longueur d'une génératrice de l'enveloppe, une série de patins à paliers fluides présentant vers l'extérieur une face d'appui cylindrique de courbure égale à celle de la surface interne de l'enveloppe et actionnés chacun par un ou plusieurs vérins dont les chambres sont ménagées dans la poutre ou solidaires de celles-ci et dont les pistons sont solidaires des patins. De l'huile est injectée sous pression entre la face d'appui du patin et la surface interne de l'enveloppe de façon à former un film permettant la rotation de l'enveloppe par effet hydrostatique ou hydrodynamique, ces deux principes pouvant d'ailleurs être combinés. Un système d'alimentation permet de régler individuellement les poussées de chaque patin pour contrôler le profil de l'enveloppe déformable, par exemple en fonction de mesures de planéité effectuées en différents endroits de la largeur du produit laminé.

On peut aménager de la sorte au moins l'un des cylindres d'appui, ou bien, dans certains cas, des cylindres de travail. Un cylindre à frette tournante de ce genre est décrit, par exemple, dans le brevet FR-A 2 553 312 de la même Société.

Dans une telle disposition, chaque patin de maintien de l'enveloppe constitue donc un palier fluide inversé dans lequel le patin est fixe par rapport à la frette qui tourne autour de l'arbre et il en résulte un certain nombre de problèmes de réalisation industrielle dûs notamment au fait que la ligne de génératrice des paliers fluides est longue par rapport au diamètre de ceux-ci.

Comme on l'a indiqué, les paliers fluides peuvent être du type hydrostatique ou hydrodynamique.

Dans le cas, le plus général, où les paliers sont du type hydrostatique, chaque patin comprend, sur sa face tournée vers l'enveloppe, une chambre alimentée en fluide sous pression avec un certain débit de fuite permettant de réaliser le film lubrifiant. Ce dernier doit être récupéré afin d'être refroidi et envoyé à nouveau dans les paliers (voir par exemple DE-A 2 332 861).

Dans le cas où l'on utilise des patins hydrodynamiques, la circulation du fluide en couche mince provoque un effet d'échauffement et, pour éviter que la température n'augmente progressivement jusqu'à un niveau excessif, il est nécessaire également de récupérer le fluide pour le refroidir avant de le réintroduire dans le cylindre.

Jusqu'à présent, cette récupération du fluide lubrifiant était effectuée simplement par gravité, mais on a constaté que cette récupération était difficile à réaliser, notamment lorsque la vitesse de rotation de la frette devient importante.

L'invention a pour objet des perfectionnements aux cylindres à frette tournante permettant de réaliser dans de bonnes conditions la récupération et le recyclage du fluide lubrifiant.

L'invention s'applique donc, d'une façon générale, à un cylindre à frette tournante, comprenant un arbre fixe en forme de poutre allongée prenant appui à ses extrémités sur un bâti de support, une frette tournante constituée d'une enveloppe cylindrique entourant l'arbre fixe et prenant appui sur ce dernier par l'intermédiaire de deux paliers de centrage placés à ses deux extrémités et alignés suivant un axe de rotation et une ligne de patins à palier fluide de maintien et de réglage du profil de l'enveloppe, disposés le long de l'arbre, chacun prenant appui sur ce dernier par l'intermédiaire d'au moins un vérin individuel de poussée et sur la face interne de l'enveloppe par l'intermédiaire d'une portée d'appui cylindrique, chaque patin étant relié à au moins un circuit d'alimentation en fluide, ce denier étant amené dans l'espace compris entre la portée d'appui et la face interne de l'enveloppe et s'échappant dudit espace avec un certain débit de fuite. (FR-A 255 312)

Conformément à l'invention, le cylindre est équipé d'au moins un organe de captage par raclage d'au moins une partie du fluide lubrifiant s'échappant des patins de maintien, constitué d'au moins un patin formant un palier hydrodynamique placé en aval dans le sens de rotation de l'enveloppe de la ligne de patins de maintien, et appliqué contre la paroi interne de l'enveloppe le long d'une génératrice de contact, ledit patin comprenant sur son extrémité tournée vers l'enveloppe, une face inclinée par rapport à la paroi interne de l'enveloppe et formant avec celle-ci un dièdre s'ouvrant vers l'amont à partir de la génératrice de contact et constituant une zone de récupération et de mise en pression du fluide dans laquelle débouche un conduit d'évacuation relié à un circuit de récupération et de recyclage du fluide. Normalement, une pluralité de patins de captage seront disposés les uns à la suite des autres le long de la génératrice de contact de façon à former, à l'intérieur de l'enveloppe, une seconde ligne de patins à palier fluide placés en aval de la première ligne de patins de maintien.

Selon une autre caractéristique chaque patin de récupération s'appuie sur la paroi interne de l'enveloppe par l'intermédiaire d'une face de contact de faible largeur,maintenue légèrement écartée de la paroi interne de l'enveloppe par le passage d'un débit minimal de fuite du fluide lubrifiant. En agissant sur le débit du circuit de récupération du fluide ou sur la pression d'appui sur l'enveloppe,on peut régler la pression entre le patin et l'enveloppe de façon à maintenir l'écartement voulu entre la face de contact du patin et la paroi interne de l'enveloppe, avec un débit minimal de fuite.

Mais l'invention sera mieux comprise grâce à la description détaillée d'un exemple de réalisation,donnée à titre d'exemple,et représentée sur les dessins annexés.

Fig.1 représente schématiquement,en coupe par un plan transversal à l'axe,un cylindre à frette tournante muni des dispositions selon l'invention;

Fig.2 est une vue de détail de la figure 1;

Fig.3 est une vue schématique du cylindre selon l'invention, en coupe axiale selon la ligne 3-3,de la figure 1.

Fig.4 est une vue schématique de détail représentant en coupe transversale un autre mode de réalisation du système de captage.

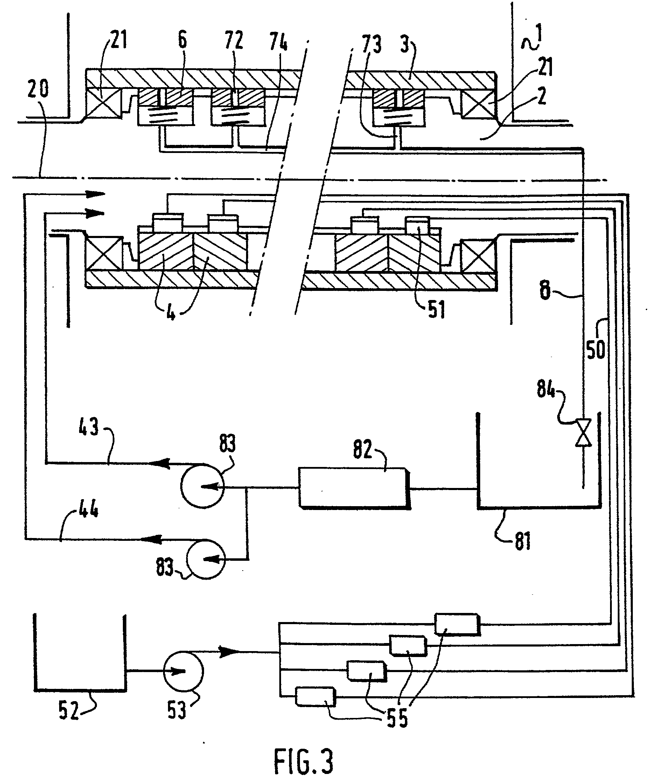

Le cylindre à frette tournante représenté schématiquement sur la figure 3,comprend, à l'intérieur d'un bâti 1, un arbre fixe 2 porté à ses extrémités par deux montants du bati 1 et sur lequel est enfilée une enveloppe tubulaire 3. Cette dernière est montée rotative sur l'arbre fixe 2 par l'intermédiaire de paliers 21 définissant un axe de rotation 20. Elle constitue ainsi ce que l'on appelle souvent une frette tournante 3.

Selon une disposition bien connue,le profil extérieur de la frette tournante 3 peut être réglé au moyen d'une série de patins de maintien 4 qui sont répartis,le long d'une génératrice,pratiquement sur toute la longueur de la paroi interne de la frette 3.Dans le cas où le cylindre 3 constitue le cylindre d'appui supérieur des rouleaux de travail d'un laminoir,les patins de maintien 4 sont centrés dans le plan vertical passant par l'axe 20 du cylindre, à la partie inférieure de la poutre 1.

Chaque patin de maintien 4 présente, du côté de la paroi interne 30 de la frette 3,une face d'appui cylindrique 40 de même rayon de courbure sur laquelle sont ménagées les conditions d'une lubrification hydrodynamique ou hydrostatique ou encore une combinaison de ces deux systèmes. De l'autre côté , chaque patin de maintien 4 prend appui sur une face intérieure 22 de la poutre 1,par l'intermédiaire d'un ou plusieurs vérins hydrauliques comprenant une chambre 5, ménagée dans la poutre 2 ou solidaire de celle-ci et à l'intérieur de laquelle se déplace un piston 51 solidaire du patin 4.Un circuit 50 permet d'alimenter en fluide sous pression les chambres des vérins 5,ces derniers étant dirigés de façon à déterminer un mouvement radial du patin correspondant 4.Chaque circuit 50 correspondant à un patin de maintien 4 est muni d'un moyen 55 de réglage individuel de la pression de poussée dudit patin 4,en fonction,notamment, d'informations données par un dispositif de mesure de planéité pouvant, par exemple,mesurer la tension du produit laminé en différents endroits répartis sur la largeur de celui-ci et correspondant aux positions respectives des patins 4 correspondants.Les circuits 50 sont alimentés par exemple à partir d'une unité de fluide sous pression comprenant un réservoir 52 et une pompe 53.

D'autre part,l'intervalle entre la face d'appui 40 du patin et la paroi interne 30 de la frette est alimenté en fluide sous pression,par exemple à partir des chambres des vérins 5 de façon à constituer un film de fluide lubrifiant qui permet la rotation de la frette.

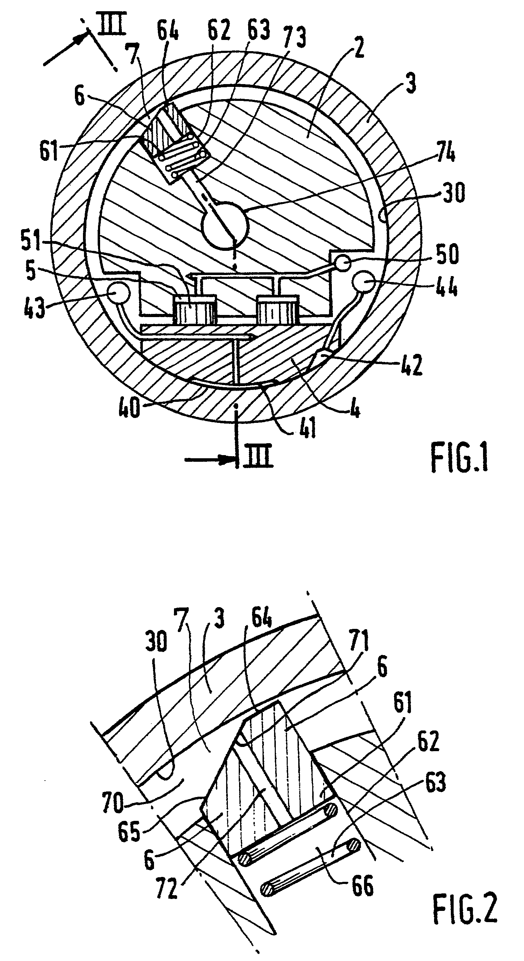

Dans l'exemple représenté sur les figures 1 et 3,la face d'appui 40 du patin est munie de systèmes d'appui à fluide, respectivement à effet hydrostatique 41 et à effet hydrodynamique 42 alimentés en fluide sous pression,respectivement par des circuits 43 et 44.Chaque patin de maintien 4 constitue ainsi une sorte de palier à fluide qui,dans l'exemple représenté,combine deux systèmes de type hydrostatique et hydrodynamique mais pourrait également fonctionner de façon hydrostatique seule ou hydrodynamique seule.

Par ailleurs,chaque patin 4 à palier fluide exerce sur la frette 3 une poussée réglable individuellement qui permet donc de contrôler le profil extérieur de la frette,notamment le long de la génératrice de contact avec les cylindres de travail,de façon à corriger les défauts de planéité en fonction des mesures effectuées.

De telles dispositions sont bien connues et peuvent faire l'objet de variantes qui sont décrites dans de nombreux brevets et c'est pourquoi il n'y a pas lieu de le décrire plus en détail,l'invention portant sur un autre objet.

En effet, quel que soit le système employé, hydrostatique, hydrodynamique ou combiné, il existe obligatoirement un débit de fuite entre la face 40 d'appui du patin et la paroi interne 30 de la frette et par conséquent le fluide lubrifiant va se répandre à l'intérieur de la cavité cylindrique limitée par la frette.

Selon une caractéristique essentielle de l'invention, le cylindre à frette tournante comprend une second ligne de patins à palier fluide 6 placés en aval de la première ligne de patins de maintien 4,dans le sens de rotation de la frette représenté par la flèche F sur la figure .

Chaque patin 6 est solidaire d'un piston 61 monté coulissant suivant une direction radiale dans une chambre 62 placée dans une zone située entre la poutre fixe et l'enveloppe et pouvant, par exemple, être ménagée à l'intérieur de la poutre fixe 2. Le piston 61 est repoussée vers l'extérieur par exemple par un moyen élastique tel qu'un ressort 63 comprimé entre le patin 61 et le fond de la chambre 62.

Comme on l'a représenté plus en détail sur la figure 2, chaque patin 6 présente, à son extrémité tournée vers la paroi interne 30 de la frette 3,une face de contact 64 qui est appliquée par le ressort 63 contre la paroi interne 3. Cette face 64 peut avoir une faible largeur étant donné que les patins 6 n'ont pas pour objet d'assurer le maintien de l'enveloppe 3 et peut même être réduite à une simple arête éventuellement arrondie. Les faces de contact 64, ou , le cas échéant, les arêtes de contact des différents patins 6 sont alignées suivant une génératrice de contact à partir de laquelle s'ouvre, du côté amont dans le sens de rotation de la frette 3,un dièdre 7 limité d'un côté par la paroi interne 30 de la frette 3 et de l'autre,par une face inclinée 65 ménagée à l'extrémité du patin 6.

Sur toute l'emprise du patin 6,le fluide lubrifiant s'échappant des patins 4 et entraîné par effet centrifuge avec la frette 3,s'accumule dans le dièdre 7 qui constitue ainsi une zone de captage à l'intérieur de laquelle la pression du fluide augmente progressivement jusqu'à la face de contact 70 du fait de l'inclinaison de la face 65 du patin.

Dans la partie centrale du patin 6 est ménagé un conduit radial 72 qui débouche d'un côté, par un orifice 71, dans la partie centrale ou aval de la face inclinée 65 et de l'autre côté dans la chambre 66 ménagée entre le fond de l'évidement 62 et le piston 61. Cette chambre 66 est reliée elle-même par un conduit 73 avec un collecteur central 74 ménagé , par exemple, à l'intérieur de l'arbre fixe 2 et s'étendant sur toute la longueur de ce dernier de façon à recueillir l'huile récupérée par tous les patins 6 de la ligne de récupération.

Le canal central 74 est relié à un circuit de récupération et de recyclage 8 représenté très schématiquement sur la figure et pouvant comprendre,par exemple,une cuve 81 de récupération,des moyens 82 d'épuration et de re froidissement de l'huile et une pompe 83 de recyclage du fluide lubrifiant dans les circuits 43 et 44 d'alimentation sous pression des systèmes à palier fluide 41 et 42 des patins de maintien 4.

Le débit du circuit de récupération 8 peut être réglé par exemple par un étrangleur 84 de façon à contrôler la pression dans la zone de récupération 7 et par conséquent le débit de fuite qui s'écoule entre la face de contact 64 et la paroi interne 30 de la frette 3. Ce débit peut être réglé à une valeur minimale en fonction de la viscosité du fluide et de la pression exercée par le patin 6 contre la frette sous l'action du ressort 63 de telle sorte que l'épaisseur du film de fluide lubrifiant du patin 6 soit suffisante pour assurer la lubrification mais cependant faible par rapport à l'épaisseur du film d'huile s'échappant des patins de maintien 4. Ainsi le risque d'échauffement progressif du fluide lubrifiant est réduit au minimum.

Bien entendu l'invention ne se limite pas aux détails du mode de réalisation qui vient d'être décrit à titre de simple exemple et qui pourrait faire l'objet de variantes, notamment en employant des moyens équivalents, sans sortir du cadre de protection défini par les revendications.

C'est ainsi que, dans l'exemple représenté,on a décrit l'utilisation d'une ligne de patins 6 s'étendant sur toute la longueur du cylindre,mais, en fonction du débit d'huile à récupérer, il pourrait être suffisant de placer des patins de récupération à certains endroits seulement de la frette. D'ailleurs, s'il semble plus logique d'utiliser une pluralité de patins disposés les uns à côté des autres mais on pourrait également envisager d'utiliser un patin unique allongé s'étendant sur toute la longueur de l'espace interne de la frette 3.

D'autre part,il est plus économique d'appliquer les patins de récupération 6 sur la frette 3 au moyen de ressorts 63,mais on pourrait envisager d'utiliser à cet effet des vérins hydrauliques dont la pression serait réglée en fonction de la pression dans la zone de récupération 7 de façon à maintenir constante l'épaisseur du film lubrifiant entre la face de contact 64 et la paroi interne 30 de la frette.

Dans une autre variante,on pourrait combiner les patins de support 4 et les patins 6 de captage de l'huile, ces derniers pouvant être situés directement à la sortie des patins de support 4 du côté aval dans le sens de rotation de la frette.

D'une façon générale, d'ailleurs, la ligne de récupération d'huile pourrait être installée dans une structure indépendante de la poutre de support 2 mais placée à l'intérieur de l'enveloppe 3.

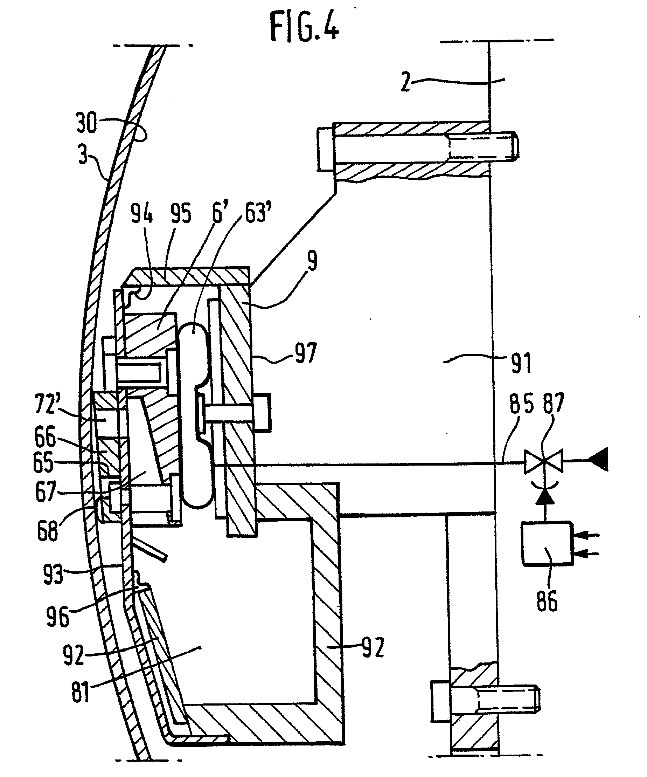

De telles dispositions sont reprises dans le mode de réalisation représenté schématiquement sur la Figure 4 .

Le système de captage est constitué alors d'un patin unique 6' en forme de règle continue s'étendant sur toute la longueur de l'enveloppe 3 et placé à l'intérieur d'un boitier 9 fixé par des supports 91 le long d'une face latérale de l'arbre 2 à un niveau voulu de celui-ci par rapport aux patins de support 4 . La partie inférieure 92 du boitier 9 forme une goulotte s'étendant au-dessous du patin 6' en forme de règle et sur toute la longueur de ce dernier, de façon à constituer la cuve 81 de récupération d'huile. Le patin 6' est monté à la partie supérieure d'une plaque de support 93 fixée par sa partie inférieure sur la base de la goulotte 92 de façon à permettre un léger déplacement radial du patin 6' , le bord supérieur de la plaque de support 93 s'appuyant par l'intermédiaire d'un joint d'étanchéité 94 sur une plaque de guidage 95 solidaire du boitier 9 et fermant ce dernier à sa partie supérieure. Un autre joint 96 est interposé entre la plaque de support 93 et le bord supérieur de la goulotte 92 de façon à assurer l'étanchéité du boitier.

Le moyen d'application du patin 6 contre l'enveloppe 3 est constitué, dans ce mode de réalisation, par une enveloppe fermée déformable 63' de forme allongée s'étendant sur toute la longueur de la règle 6', mais qui peut être aussi constitué de plusieurs enveloppes isolées réparties sur la longueur de la règle 6'. L'enveloppe déformable 63' est interposée entre le patin 6' et une face d'appui 97 du boitier 9 et reliée à un circuit 85 d'alimentation en fluide sous pression, par exemple en air comprimé, qui permet de gonfler l'enveloppe déformable 63' pour repousser le patin 6' vers l'enveloppe cylindrique 3.

Le patin 6' s'appuie sur la face interne 30 de l'enveloppe cylindrique 3 par l'intermédiaire d'une règle plate 66 en régule ou autre matière anti-friction sur laquelle est ménagée une face inclinée 65.

Des orifices 72' régulièrement écartés les uns des autres sont ménagés le long de la règle plate 66 et traversent la plaque de support 93 de façon à déboucher dans espace 67 ménagé dans le patin en forme de règle 6' et s'ouvrant vers le bas pour déboucher dans la goulotte 92.

Enfin, au moins deux plots 68, également en métal anti-friction sont fixés aux extrémités latérales de la plaque de support 93, en amont de la règle plate 66, de façon à assurer la stabilité de celle-ci en s'appuyant contre la face interne 30 de l'enveloppe cylindrique.

L'ensemble fonctionne de la façon décrite plus haut pour le patin 6, mais l'utilisation d'une enveloppe gonflable 63' pour appliquer le patin 6' contre l'enveloppe présente l'avantage de permettre une régulation de la pression d'application en fonction de la vitesse de rotation de l'enveloppe cylindrique 3 et du débit total de fluide s'échappant des patins de maintien 4. Par exemple, sur la Figure 4, on a représenté schématiquement un régulateur 86 aux entrées duquel sont appliqués des signaux représentatifs de la vitesse de rotation mesurée de l'enveloppe 3 et du débit d'huile envoyée aux patins de maintien 41-42 par les circuits 43-44, et qui élabore un signal de commande appliqué sur une vanne 87 de régulation de la pression d'air envoyé à l'enveloppe 63' par le circuit 85.

## Revendications

1. Cylindre à frette tournante comprenant un arbre fixe (2) en forme de poutre allongée prenant appui à ses extrémités sur un bâti de support (1), une frette tournante constituée d'une enveloppe cylindrique (3) entourant l'arbre fixe (2) et prenant appui sur ce dernier par l'intermédiaire de deux paliers de centrage (21) placés aux deux extrémités de l'enveloppe (3) et alignés suivant un axe de rotation (20), et une ligne de patins de maintien (4) à palier fluide, disposés le long de l'arbre (2), chacun prenant appui sur ce dernier, par l'intermédiaire d'au moins un vérin individuel de poussée (5) et sur la face interne (30) de l'enveloppe (3) par l'intermédiaire d'une portée d'appui cylindrique (40), un fluide lubrifiant étant injecté sous pression dans l'espace compris entre la portée d'appui (40) et la face interne (30) de l'enveloppe et s'échappant dudit espace avec un certain débit de fuite, caractérisé par le fait qu'il comprend au moins un organe (6) de captage par raclage d'au moins une partie du fluide lubrifiant s'échappant des patins de maintien (4), constitué d'au moins un patin (6) formant un palier hydrodynamique, placé en aval, dans le sens de rotation de l'enveloppe, de la ligne de patins de maintien (4), et appliqué contre la paroi interne (30) de l'enveloppe (3) le long d'une génératrice de contact, ledit patin (6) comprenant, sur son extrémité tournée vers l'enveloppe (3), une face (65) inclinée par rapport à la paroi interne (30) de l'enveloppe (3) et formant avec celle-ci un dièdre (7) s'ouvrant vers l'amont à partir de la génératrice de contact (64) et constituant une zone (7) de récupération et de mise en pression du fluide, dans laquelle débouche un conduit d'évacuation (72) relié à un circuit (8) d'évacuation et de recyclage du fluide.

2. Cylindre à frette tournante selon la revendication 1, caractérisé par le fait qu'il comprend une pluralité de patins de captage (6) disposés les uns à la suite des autres le long d'une génératrice de contact (64) et formant, à l'intérieur de l'enveloppe, une seconde ligne de patins à palier fluide, en aval de la première ligne de patins de maintien (4).

3. Cylindre à frette tournante selon la revendication 1, caractérisé par le fait qu'il comprend un patin de captage (6) en forme de règle continue parallèle à l'axe du cylindre et couvrant sensiblement toute la longueur de l'enveloppe, ladite règle s'appuyant sur la face interne (30) de l'enveloppe (3) le long d'une génératrice.

4. Cylindre à frette tournante selon l'une des revendications précédentes, caractérisé par le fait que chaque patin de captage (6) est monté coulissant sur l'arbre fixe (2) suivant une direction radiale et est associé à un moyen d'application contre la face interne (30) de l'enveloppe (3) prenant appui sur l'arbre fixe (2).

5. Cylindre à frette tournante selon la revendication 4, caractérisé par le fait que le moyen d'application de chaque patin de captage (6) est constitué par au moins un ressort comprimé entre le patin (6) et l'arbre fixe (2).

6. Cylindre à frette tournante selon la revendication 4, caractérisé par le fait que le moyen d'application de chaque patin de captage (6) est constitué par une enveloppe fermée déformable interposée entre le patin (6) et l'arbre fixe (2) et reliée à des moyens de gonflage sous pression.

7. Cylindre à frette tournante selon la revendication 6, caractérisé par le fait qu'il est associé à des moyens de régulation de la pression d'application du patin (6) en fonction de la vitesse de rotation de l'enveloppe (3) et du débit de fuite du fluide lubrifiant des patins de maintien (4).

8. Cylindre à frette tournante selon l'une des revendications précédentes, caractérisé par le fait que l'organe de captage (6) s'appuie sur la paroi interne de l'enveloppe par l'intermédiaire d'une face de contact (64) de faible largeur maintenue écartée de la paroi interne de l'enveloppe d'une faible distance formant un espace de passage d'un débit minimal de fuite du fluide lubrifiant.

9. Cylindre à frette tournante selon l'une des revendications 1 et 8, caractérisé par le fait que le circuit (8) d'évacuation du fluide comprend des moyens (84) de réglage du débit pour le maintien, entre le patin (6) et l'enveloppe (3), d'une pression suffisante pour maintenir l'écartement de la face de contact (64) du patin avec un débit minimal de fuite.

10. Cylindre à frette tournante selon l'une des revendications précédentes, caractérisé par le fait que le circuit (8) d'évacuation et de recyclage du fluide comprend un collecteur (74) du fluide récupéré dans chaque patin de captage (6), relié à une cuve de récupération (81) alimentant, par l'intermédiaire de moyens (82) d'épuration et de refroidissement, une pompe (83) de recyclage du fluide sous pression dans au moins un circuit (42) d'alimentation en fluide sous pression d'au moins un système (41) d'appui à fluide de chaque patin de maintien (4).

11. Cylindre à frette tournante selon les revendications 3 et 10, caractérisé par le fait que la cuve (81) de récupération du fluide est constituée d'une goulotte (92) s'étendant sur toute la longueur du patin (6) en forme de règle et formant un espace fermé tubulaire dans lequel débouchent une pluralité d'orifices espacés les uns des autres de passage du fluide.

## Patentansprüche

Drehende Ringwalze, bestehend aus einer feststehenden Welle (2) in Form eines länglichen Trägers, der sich an seinen Enden auf einem Stützgestell (1) abstützt, aus einem drehenden Walzring, der aus einem die feststehende Welle (2) umgebenden zylindrischen Mantel (3) gebildet ist, sich auf dieser Welle durch zwei Zentrierlager (21) an den beiden Enden des Mantels (3) abstützt und zu einer Drehachse (20) ausgerichtet ist, und aus einer Reihe aus Fluidlagertragkufen, die entlang der Welle (2) angeordnet sind und sich jeweils auf der letzteren mittels wenigstens eines Druckkraftzylinders (5) und auf der Innenfläche (30) des Mantels (3) mittels eines zylindrischen Stützflächenbereiches (40) abstützen, wobei ein Schmierfluid unter Druck in den Spalt zwischen der Stützfläche (40) und der Innenfläche (30) des Mantels (3) eingespritzt wird und aus dem Spalt mit einem gewissen Leckverlust ausströmt, gekennzeichnet durch wenigstens ein Organ (6) zum Abstreifen wenigstens eines Teiles des Schmierfluides, welches aus den Tragkufen (4) ausströmt, wobei das Abstreiforgan aus wenigstens einer ein hydrodynamisches Lager bildenden, in Drehrichtung des Mantels abströmwärts der Reihe aus Tragkufen (4) angeordneten Gleitbacke (6) besteht und an der Innenwand (30) des Mantels (3) entlang einer Kontakterzeugenden anliegt und wobei die Gleitbacke (6) auf ihrem dem Mantel (3) zugekehrten Ende eine Fläche (65) aufweist, die zur Innenwand (30) des Mantels geneigt ist und mit dieser Wand eine V-Form (7) bildet, die sich, ausgehend von der Kontakterzeugenden (64), zuströmwärts öffnet und eine Zone zur Rückgewinnung und zum Unterdrucksetzen des Fluides bildet, in die eine Evakuierungsleitung (7) einmündet, die mit einem Kreis zur Evakuierung und Rückführung des Fluides verbunden ist.

2. Ringwalze nach Anspruch 1, dadurch gekennzeichnet, daß sie eine Mehrzahl Abstreifgleitbacken (6) besitzt, die hintereinander entlang einer Kontakterzeugenden (64) angeordnet sind und im Innern des Mantels eine zweite Fluidlagertragkufenreihe abströmwärts der ersten Tragkufenreihe (4) bilden.

3. Ringwalze nach Anspruch 1, dadurch gekennzeichnet, daß sie eine Abstreifgleitbacke (6) in Form einer parallel zur Walzenachse gehaltenen Leiste aufweist die im wesentlichen die ganze Länge des Mantels übergreift, wobei sich die Leiste auf der Innenfläche (30) des Mantels (3) entlang einer Erzeugenden abstützt.

4. Ringwalze nach einem der vorangehenden Ansprüche, dadurch gekennzeichnet, daß jede Abstreifgleitbacke (6) in der feststehenden Welle (2) in radialer Richtung gleitend montiert ist und mit einem Mittel zur Anlage gegen die Innenfläche (30) des Mantels (3) versehen ist, das sich auf der feststehenden Welle (2) abstützt.

5. Ringwalze nach Anspruch 4, dadurch gekennzeichnet, daß das Anlagemittel jeder Abstreifgleitbacke (6) aus wenigstens einer Feder besteht, die zwischen der Gleitbacke (6) und der feststehenden Welle (2) vorgespannt ist.

6. Ringwalze nach Anspruch 4, dadurch gekennzeichnet, daß das Anlagemittel jeder Abstreifgleitbacke (6) aus einem deformierbaren geschlossenen Hülle zwischen der Gleitbacke (6) und der feststehenden Welle (2) besteht und mit Mitteln zum Aufblasen unter Druck verbunden ist.

7. Ringwalze nach Anspruch 6, dadurch gekennzeichnet, daß sie mit Mitteln zur Regelung der Druckanlage auf die Gleitbacke (6) in Funktion der Drehgeschwindigkeit des Mantels (3) und des Leckverlustes an Schmierfluid der Tragkufen (4) versehen ist.

8. Ringwalze nach einem der vorangehenden Ansprüche, dadurch gekennzeichnet, daß das Abstreiforgan (6) sich an der Innenwand des Mantels durch eine Kontaktfläche (64) von geringer Breite abstützt, die von der Innenwand des Mantels mit einem geringen Abstand getrennt gehalten ist, der einen Durchgang für einen minimalen Leckverlust an fluidem Schmiermittel bildet.

9. Ringwalze nach einem der vorangehenden Ansprüche, dadurch gekennzeichnet, daß der Kreis (8) zur Fluidevakuierung Mittel (84) zur Regelung des Verlustes für die Aufrechterhaltung eines genügenden Druckes zwischen der Gleitbacke (6) und dem Mantel (3) aufweist, um die Trennung der Kontaktfläche (64) der Gleitbacke mit minimalem Leckverlust aufrechtzuerhalten.

10. Ringwalze nach einem der vorangehenden Ansprüche, dadurch gekennzeichnet, daß der Kreis (8) zur Evakuierung und Rückführung von Fluid aus einem Sammler (74) für das von jeder Abstreifgleitbacke (6) zurückgewonnenen Fluid besteht, wobei der Sammler mit einem Gefäß (81) zur Wiedergewinnung verbunden ist, das über Reinigungs- und Kühlungsmittel (82) eine Pumpe (83) zur Rückgewinnung des Druckfluides in wenigstens einem Druckfluidspeisekreis (42) für wenigstens einen System (41) zur Fluidstützung jeder Tragkufe (4) speist.

11. Ringwalze nach den Ansprüchen 3 und 10, dadurch gekennzeichnet, daß das Gefäß (81) zur Rückgewinnung von Fluid aus einer Rinne (92) besteht, die sich über die ganze Länge der Gleitbacke (6) in Form einer Leiste erstreckt und einen geschlossenen rohrförmigen Hohlraum bildet, in den eine Mehrzahl von getrennten Fluiddurchgangöffnungen einmündet.

## Claims

1. Roll with a rotating shell comprising a stationary shaft (2) in the form of an elongate beam whose ends rest on a supporting stand (1), rotating shell consisting of a cylindrical shell (3) surrounding the stationary shaft (2) and resting on the latter by means of two centering bearings (21) placed at both ends of the shell (3) and aligned along an axis of rotation (20), and a line of supporting shoes (4) with a fluid bearing, which are arranged along the shaft (2), each supporting shoe resting on said shaft by means of at least one individual thrust jack (5) and on the inner face (30) of the shell (3) by means of a cylindrical bearing face (40), a lubricating fluid being injected under pressure into the space included between said bearing face (40) and said inner face (30) of the shell, said fluid escaping from said space at a certain leakage rate, characterized in that it comprises at least one device (6) for recovery by raking of at least a part of the lubricating fluid escaping from the supporting shoes (4), said device (6) consisting of at least a shoe (6) forming a hydrodynamic bearing, placed downstream, in the direction of rotation of the shell, of the line of supporting shoes (4), and applied against the inner face (30) of the shell (3) along a generatrix of contact, said shoe (6) comprising, on its end facing the shell (3), a face (65) which is inclined in relation to the inner face (30) of the shell (3) and forming with the latter a dihe-dron (70) opening in the upstream direction from the generatrix of contact (64) and forming a fluid recovery and pressurization zone (70), into which there opens a discharge passage (72) connected to a circuit (8) for removal and recycling of the fluid.

2. Roll with a rotating shell according to Claim 1, characterized in that it comprises a plurality of recovery shoes (6) arranged following one another along a generatrix of contact (64) and forming, inside the shell, a second line of fluid bearing shoes, downstream of the first line of supporting shoes (4).

3. Roll with a rotating shell according to Claim 1, characterized in that it comprises a recovery shoe (6) in the form of a continuous guide bar parallel to the axis of the roll and covering substantially the entire length of the shell, the said guide bar bearing on the inner face (30) of the shell (3) along a generatrix.

4. Roll with a rotating shell according to one of the preceding claims, characterized in that each recovery shoe (6) is mounted slidably on the stationary shaft (2) in a radial direction and is associated with a means for application against the inner face (30) of the shell (3) bearing on the stationary shaft (2).

5. Roll with a rotating shell according to Claim 4, characterized in that the means for application of each recovery shoe (6) consists of at least one spring compressed between the shoe (6) and the stationary shaft (2).

6. Roll with a rotating shell according to Claim 4, characterized in that the means for application of each recovery shoe (6) consists of a deformable closed shell inserted between the shoe (6) and the stationary shaft (2) and connected to means of inflation under pressure.

7. Roll with a rotating shell according to Claim 6, characterized in that it is associated with means for regulating the pressure of application of the shoe (6) as a function of the speed of rotation of the shell (3) and of the leakage flow of the fluid lubricating the supporting shoes (4).

8. Roll with a rotating shell according to one of the preceding claims, characterized in that the recovery device (6) bears on the inner wall of the shell by means of a contact face (64) of small width, kept apart from the inner wall of the shell by a small distance forming a passage space for a minimum leakage flow of the lubricating fluid.

9. Roll with a rotating shell according to one of Claims 1 and 8, characterized in that the fluid removal circuit (8) comprises means (84) for adjusting the flow in order to maintain between the shoe (6) and the shell (3) a pressure which is sufficient to maintain the separating distance of the contact face (64) of the shoe with a minimum leakage flow.

10. Roll with a rotating shell according to one of the preceding claims, characterized in that the fluid removal and recycling circuit (8) comprises a manifold (74) for the fluid recovered in each recovery shoe (6), which is connected to a recovery vessel (81), feeding, via means (82) for purifying and cooling, a pump (83) for recycling the fluid under pressure into at least one circuit (42) for supplying fluid under pressure to at least one fluid bearing system (41) of each supporting shoe (4).

11. Roll with a rotating shell according to Claims 3 and 10, characterized in that the fluid recovery vessel (81) consists of a channel (92) extending over the entire length of the shoe (6) in the shape of a guide bar and forming a tubular closed space into which there open a plurality of fluid passage orifices which are at a distance from each other.

EP 0 225 827 B1

FIG.1

FIG.2

FIG.3

# FIG.4